(19) Europäisches Patentamt
European Patent Office
Office européen des brevets

(11) **EP 2 108 112 B1**

(12) **EUROPÄISCHE PATENTSCHRIFT**

(45) Veröffentlichungstag und Bekanntmachung des Hinweises auf die Patenterteilung:
**07.12.2011 Patentblatt 2011/49**

(21) Anmeldenummer: **08715435.7**

(22) Anmeldetag: **02.01.2008**

(51) Int Cl.:
**G01N 3/32** (2006.01)     **G01N 27/72** (2006.01)
**G01N 27/90** (2006.01)

(86) Internationale Anmeldenummer:
**PCT/DE2008/000020**

(87) Internationale Veröffentlichungsnummer:
**WO 2008/080395 (10.07.2008 Gazette 2008/28)**

(54) **VERFAHREN ZUR BESTIMMUNG DER RESTLEBENSDAUER UND/ODER DES ERMÜDUNGSZUSTANDES VON BAUTEILEN**

METHOD FOR DETERMINING THE REMAINING SERVICE LIFE AND/OR FATIGUE STATE OF COMPONENTS

PROCÉDÉ POUR DÉTERMINER LA DURÉE DE VIE RÉSIDUELLE ET/OU L'ÉTAT DE FATIGUE DE PIÈCES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **03.01.2007 DE 102007001464**

(43) Veröffentlichungstag der Anmeldung:
**14.10.2009 Patentblatt 2009/42**

(73) Patentinhaber: **Fraunhofer-Gesellschaft zur Förderung der angewandten Forschung e.V. 80686 München (DE)**

(72) Erfinder:
• **SCHREIBER, Jürgen 01189 Dresden (DE)**
• **KRÖNING, Michael 66123 Saarbrücken (DE)**
• **PANIN, Viktor, Jefgenevitsch 634055 Tomsk (RU)**

(74) Vertreter: **Pfenning, Meinig & Partner GbR Patent- und Rechtsanwälte An der Frauenkirche 20 01067 Dresden (DE)**

(56) Entgegenhaltungen:
**WO-A-83/01836     US-A- 6 073 493**

• **J.SCHREIBER, M.KRÖNING: "Bewertung der Ermüdungsschädigung von Reaktorteilen anhand fraktaler eigenschaften von Verformungsstrukturen und deren Rauschverhalten" 31. MPA-SEMINAR IN VERBINDUNG MIT DER FACHTAGUNG "WERKSTOFF- & BAUTEILVERHALTEN IN DER ENERGIE- & ANLAGENTECHNIK", 13. Oktober 2005 (2005-10-13), - 14. Oktober 2005 (2005-10-14) Seiten 38.1-38.22, XP009102028 in der Anmeldung erwähnt**
• **PROF. JÜRGEN SCHREIBER: "Evaluation of materials fatigue of components for nuclear power stations by fractal analysis of deformation structures" NUCLEAR ENERGY AND SAFETY RESEARCH DEPARTMENT COLLOQUIUM, [Online] 22. Februar 2006 (2006-02-22), XP002485517 Gefunden im Internet: URL:http://nes.web.psi.ch/abstracts/abstra ct97.html> [gefunden am 2008-06-23]**
• **PALMA E S ET AL: "Fatigue damage assessment in AISI 8620 steel using Barkhausen noise" INTERNATIONAL JOURNAL OF FATIGUE, BUTTERWORTH SCIENTIFIC LTD, GUILDFORD, GB, Bd. 27, Nr. 6, 1. Juni 2005 (2005-06-01), Seiten 659-665, XP004774341 ISSN: 0142-1123**
• **KUZNETSOV ET AL: "Fractal dimension and effects of correlation of the mesostructure of the surface of plastically deformed iron silicide polycrystals and austenitic corrosion-resistant steel" METAL SCIENCE AND HEAT TREATMENT, Bd. 43, Nr. 3-4, 2001, XP002485518**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- VINCENT ET AL: "Magnetic Barkhausen noise from strain-induced martensite during low cycle fatigue of 304L austenitic stainless steel" ACTA MATERIALIA, ELSEVIER, OXFORD, GB, Bd. 53, Nr. 17, 1. Oktober 2005 (2005-10-01), Seiten 4579-4591, XP005065713 ISSN: 1359-6454
- LINDGREN M ET AL: "Application of a novel type Barkhausen noise sensor to continuous fatigue monitoring" NDT & E INTERNATIONAL, BUTTERWORTH-HEINEMANN, OXFORD, GB, Bd. 33, Nr. 6, 1. September 2000 (2000-09-01), Seiten 423-428, XP004292715 ISSN: 0963-8695
- DONZELLA G ET AL: "SOME EXPERIMENTAL RESULTS ABOUT THE CORRELATION BETWEEN BARKHAUSEN NOISE AND THE FATIGUE LIFE OF STEEL SPECIMENS" JOURNAL OF MAGNETISM AND MAGNETIC MATERIALS, ELSEVIER SCIENCE PUBLISHERS, AMSTERDAM, NL, Bd. 133, Nr. 1/03, 1. Mai 1994 (1994-05-01), Seiten 613-616, XP000443757 ISSN: 0304-8853

## Beschreibung

Die Erfindung betrifft ein Verfahren zur Bestimmung der Restlebensdauer und/oder des Ermüdungszustandes von Bauteilen.

So werden Bauteile für eine bestimmte Lebensdauer unter Zugrundelegung der spezifischen betriebsbedingten Belastungen ausgelegt. Insbesondere für Anlagen und Bauteile an der Grenze der geplanten Lebensdauer wird es wichtig, die noch mögliche Restlebensdauer zu ermitteln. Diese erfolgt in der Regel über aufwendige Maßnahmen zur Zustandsbewertung.

Ein wesentlicher Aspekt der Zustandsbewertung ist neben der Ermittlung der realen betrieblichen Belastung die Ermittlung von Werkstoffschädigungen, wie sie z.B. in Form der Werkstoffermüdung auftreten können. Die Ermittlung der Werkstoffermüdung spielt darüber hinaus eine große Rolle, wenn die betrieblichen Belastungen in Relation zu den spezifizierten Werkstoffeigenschaften aus z.B. unvorhersehbaren Gründen die spezifischen Grenzwerte überschritten haben sollten. Deshalb kann festgestellt werden, dass die Ermittlung der Werkstoffermüdung eine zentrale Rolle spielt bei der sicherheitstechnischen Bewertung des Zustandes von Bauteilen, wie sie insbesondere in gefährlichen technischen Anlagen und Komponenten vorhanden sind.

Eine verlässliche Bewertung der Restlebensdauer von Bauteilen, z.B. von Komponenten kerntechnischer Anlagen ist eine Aufgabe von gleichermaßen großer technischer und wirtschaftlicher Bedeutung. Einerseits hängt davon die Betriebssicherheit ab, andererseits hat eine möglichste hohe Ausnutzung der Lebensdauer einen hohen ökonomischen Effekt. Zur Früherkennung von Ermüdungsschädigungen in Folge mechanischer Wechselbeanspruchung und zur Lebensdauerabschätzung bedient man sich heute kommerzieller Komponentenüberwachungssysteme auf der Basis von Temperatursensoren und/oder Dehnungsmessstreifen sowie entsprechender Berechnungsvorschriften (z.B. Rainflow-Algorithmus]. Dabei konzentriert man sich auf die mit Hilfe einer Spannungsanalyse ermittelten höchstbelasteten Stellen einer Anlage. Außerdem ist nicht auszuschließen, dass Ereignisse besonderer Beanspruchung auftreten bzw. bereits während des bisherigen Betriebs aufgetreten sind (z.B. Wasserschlag beim Anfahren), die bei der Auslegung nicht berücksichtigt wurden. In diesem Fall stellt sich die Frage nach der durch dieses Ereignis schon verbrauchten Lebensdauer. Hier sind Techniken der zerstörungsfreien Prüfung (ZfP) gefordert, belastbare Antworten zu geben.

Bisher wurde eine Vielzahl von Ansätzen verfolgt, wobei zur Charakterisierung des Werkstoffzustandes jeweils mikro-, meso- oder makrostrukturelle Veränderungen herangezogen worden sind.

Die Entstehung und Ausbreitung von Rissen wurde mit Mitteln der klassischen ZfP (z.B. Farbeindringverfahren, Magnetpulverprüfung, Wirbelstrom- und Ultraschalltechniken untersucht. Die Anwendung dieser Verfahren setzt die Kenntnis der hochbelasteten Stellen bzw. Schwachstellen voraus und greift erst im letzten Zehntel der bis dahin verbrauchten Lebensdauer.

Wirbelstromverfahren sind zwar geeignet, frühe Ermüdungszustände zu charakterisieren. Die Korrelation der Messergebnisse ist in der Regel aber nur bei Kenntnis der Belastungsgeschichte möglich.

Thermometrische Verfahren können zur Beschreibung des zyklischen Verformungsverhaltens metallischer Werkstoffe eingesetzt werden.

Die bisherigen Versuche, die Restlebensdauer oder den Ermüdungszustand durch eine zerstörungsfreie Charakterisierung zu bestimmen, erfüllen die Erwartungen nur bedingt. Entweder werden Messgrößen verwendet, die sehr zeitig einen Sättigungswert annehmen (z.B. mittlere Linienbreite der Röntgenreflexe und Positronenannihilation) und damit nur im Frühstadium der Ermüdung nützlich sind, oder es erfolgt eine signifikante Anzeige erst unmittelbar im kritischen Bereich (z.B. Schallemission und Thermographie), was bei hohem Sicherheitsrisiko ungeeignet ist. Auch die auf elektromagnetischen Messgrößen basierenden Verfahren, weisen Schwierigkeiten beim praktischen Einsatz auf. Diese Schwierigkeiten ergeben sich aus der komplexen Natur der Ermüdungsvorgänge. In der Regel reagieren die Messgrößen auf Veränderungen sowohl der inneren mechanischen Spannungen als auch der Mikrostruktur (Leerstellen, Versetzungen, Gefüge- und magnetische Textur sowie kollektive Verformungsstrukturen). Die Entwicklung der Spannungen ist dabei abhängig von der Art der Beanspruchungen (z.B. ein- oder mehrachsige Lastspannungen), von der Änderung der magnetischen Textur und wird durch Entfestigungs- und Verfestigungsvorgänge beeinflusst, die ganz unterschiedlich auftreten können.

Elektromagnetische Messungen erlauben es zwar einerseits die Veränderungen in der Mikrostruktur (Entfestigung oder Verfestigung) während der Ermüdungsschädigung zu verfolgen, ohne Kenntnis der Vorgeschichte sind sie aber wegen der komplexen Natur der Ermüdungsvorgänge und der Messergebnisse an der Komponente schwer zu interpretieren.

Zusammenfassend kann fest gehalten werden, dass es gegenwärtig für den praktischen Einsatz keine, zerstörungsfreien Verfahren gibt, die ohne Vorkenntnis zum Verlauf der Ermüdung den aktuellen Zustand bzw. die Restlebensdauer ermitteln können.

Möglichkeiten für die Bestimmung der Werkstoffermüdung im Vorrissstadium sind von J. Schreiber, M. Kröning in "Bewertung der Ermüdungsschädigung von Reaktorteilen anhand fraktaler Eigenschaften von Verformungsstrukturen und deren Rauschverhalten", in Materialien zum 31. MPA-Seminar in Verbindung mit der Fachtagung "Werkstoff- & Bauteilverhalten in der Energie- & Anlagentechnik" (Stuttgart, 2005) Seite 38.1-38.21 beschrieben.

Ein zerstörungsfreies Prüfverfahren zur Bestimmung des Ermüdungszustands von Bauelementen in Kernkraftanlagen, bei dem Verformungsstrukturen mittels Fraktalanalyse berücksichtigt werden können, ist von J. Schreiber unter dem Titel "Evaluation of materials fatigue of components for nuclear power stations by fractal analysis of deformation structures"; NUCLEAR ENERGY AND SAFETY RESEARCH DEPARTMENT COLLOQUIUM, [Online] 22. Februar 2006, XP002485517 vorgestellt worden.

Es ist daher Aufgabe der Erfindung eine Möglichkeit vorzuschlagen, mit der der Ermüdungszustand und/oder die Restlebensdauer von Bauteilen aus plastisch verformbaren metallischen Werkstoffen zerstörungsfrei bestimmen zu können, ohne dass die vorab auf das jeweilige Bauteil bereits gewirkten Belastungen oder Vorschädigungen bekannt sind.

Erfindungsgemäß wird diese Aufgabe mit einem Verfahren nach Anspruch 1 gelöst. Vorteilhafte Ausgestaltungen und Weiterbildungen der Erfindung können mit in untergeordneten Ansprüchen bezeichneten Merkmalen erreicht werden.

Erfindungsgemäß wird dabei so vorgegangen, dass lokal definiert am Bauteil Spannungsamplituden innerhalb charakteristischer Zeitintervalle $\Delta t_i$ mit diesen zugeordneten Lastspielzahlen pro Zeitintervall $\alpha(\Delta t_i) = \Delta N (\Delta t_i)/\Delta t_i$ zeitbezogen bestimmt werden, dabei aus der Wöhlerlinie des jeweiligen Werkstoffs die für die bestimmten Spannungsamplituden repräsentativen Lastspielzahlen $N_B (\Delta t_i)$ bis zum Erreichen der Bruchgrenze ermittelt und dann aus den gemessenen elektrischen oder magnetischen Rauschssignalen für größere Zeitintervalle $\Delta T_m = \Sigma \Delta t_i$ die fraktale Dimension $D_F(m)$ bestimmt und daraus die Restlebensdauer oder der Ermüdungszustand ermittelt wird.

Dabei sollten alle Zeitintervalle $\Delta t_i$ innerhalb einer Periode zwischen zwei nachfolgenden Bestimmungen der fraktalen Dimension $D_F$ summiert werden.

Die Restlebensdauer $T_R$ zum Zeitpunkt einer m-ten Messung kann mit

$$T_R = \frac{1}{M_m} \sum_i \frac{N_B(\Delta t_i)}{\alpha(\Delta t_i)}(1 - \exp(-\tau_m))$$

berechnet werden; wobei $M_m$ die Gesamtzahl Summanden für das Zeitintervall $\Delta T_m$ ist. Die Größe $\tau_m$ ist dabei ein aus der fraktalen Dimension $D_F(m)$ abgeleitetes Maß für den Schädigungsgrad des zu bewertenden Werkstoffs. Wie in Versuchen von J. Schreiber, M. Kröning in "Bewertung der Ermüdungsschädigung von Reaktorteilen anhand fraktaler Eigenschaften von Verformungsstrukturen und deren Rauschverhalten", in Materialien zum 31. MPA-Seminar in Verbindung mit der Fachtagung "Werkstoff- & Bauteilverhalten in der Energie- & Anlagentechnik" (Stuttgart, 2005) Seite 38.1-38.21 nachgewiesen und J. Schreiber, V. Panin, P.V. Kuznetsov: "Zerstörungsfreie Bestimmung der Restlebensdauer auf der Grundlage von Modellen der Mesomechanik", Abschlußbericht, BMBF-Förderprojekt, Nr. 03N90074 (1999) beschrieben.

Für den jeweiligen Werkstoff von Bauteilen sollten Kalibrierverläufe $D_F(N/N_B)$ mittels Schwingwechselbeanspruchung ermittelt werden. Diese können dann mit den Ergebnissen, die am jeweiligen Bauteil ermittelt worden sind, verglichen und für die Bestimmung des Ermüdungszustandes oder der Restlebensdauer durch Vergleich herangezogen werden.

Bei der Erfindung können magnetische, ferroelektrische Barkhausenrauschsignale oder auch Rauschsignale gepulster Wirbelströme bestimmt werden.

Die Rauschsignale sollten an mehreren Positionen des Bauteils zeitgleich bestimmt werden. Es besteht aber auch die Möglichkeit, dass Rauschsignale sequentiell bestimmt werden.

Rauschsignale sollten innerhalb eines Frequenzintervalls von 1 bis 5000 kHz bestimmt werden, wobei eine Frequenz gewählt werden sollte, die die für das Bauteil und/oder die jeweilige Position am Bauteil spezifischen Anregungsfrequenz und/oder magnetischen Feldstärke berücksichtigt.

Neben der fraktalen Dimension $D_F$ kann auch der Spannungszustand mittels integraler Rauschparameter bestimmt werden. Dazu kann entweder die integrale Rauschamplitude verwendet werden, die zusätzlich über mehrere Umläufe um die Hystereseschleife bei der Magnetisierung gemittelt werden kann. Alternativ eignet sich auch der Wert der mittleren quadratischen Schwankungen der Barkhausenrauschsignale. Um quantitative Aussagen aus diesen Messgrößen über die mechanischen Spannungen zu erhalten, wird entweder ein Zugversuch bei gleichzeitiger Messung des Barkhaussenrauschens durchgeführt oder es werden Vergleichsmessungen, z.B. mittels Röntgen- bzw. Neutronendiffraktion verwendet.

In praktischen Versuchen hat sich auch ein weiterer Parameter als geeignet erwiesen. Mit Hilfe der Asymmetrie der Rauschkurve beim Umlauf um die Hystereseschleife, die sich aus dem dritten Moment der Verteilung der Rauschssignale über der Magnetfeldstärke ergibt, kann man das Gebiet lokaler plastischer Verformung ermitteln.

Die Ermittlung der Schädigung bei plastischer Verformung und zyklischer Beanspruchung mit der Möglichkeit der Detektion kritischer Positionen von Bauteilen im Vorrissstadium ist mit Bestimmung der fraktalen Dimension von Rauschsignalen möglich. Das jeweilige Bauteil kann zur Ermittlung der kritischen Positionen in einem geeigneten Raster geprüft werden.

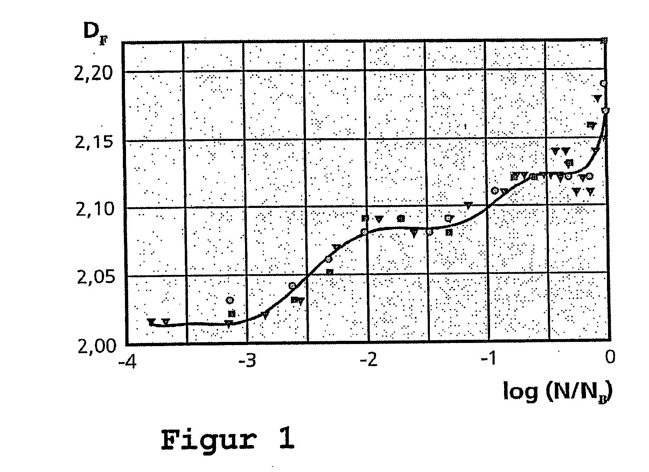

Bei der Erfindung kann auf experimentelle Untersuchungen der Verformungsstrukturen ermüdungsbeanspruchter und plastisch deformierter ferritischer und austenitischer Stähle aufgebaut werden. Dabei zeigte sich, dass diese Strukturen in bestimmten Skalenbereichen ein fraktales Verhalten aufweisen. Zum Studium dieses Verhaltens wurden bekannte Algorithmen genutzt, wobei es im Ergebnis umfangreicher methodischer Arbeiten und zahlreicher Datenanalysen gelang, Störeinflüsse zu separieren und sichere Aussagen über die fraktale Dimension $D_F$ der Verformungsstrukturen abzuleiten. Bei zunehmender Beanspruchung wurde für die untersuchten Werkstoffe ein Anwachsen von $D_F$ gefunden (siehe auch Figur 1).

Außerdem konnte eine Korrelation des fraktalen Verhaltens der Oberflächentopographie und der magnetischen Domänenstruktur nachgewiesen werden.

Beim erfindungsgemäßen Verfahren, das zerstörungsfrei und robust zur Prüfung an Bauteilen eingesetzt werden kann, bietet vor allem das Skalenverhalten der zeitabhängigen magnetischen Barkhausenrausch-Signale die Möglichkeit, eine Bewertung der Verformungsstrukturen vorzunehmen. Bei den entsprechenden Messungen wurde der oberflächennahe, lateral auf wenige Millimeter begrenzte Bereich für eine Prüfaussage erfasst. Der aus der Zeitreihe der magnetischen Rauschsignale gewonnene Skalenparameter "fraktale Dimension" $D_F$ zeigt qualitativ das gleiche Verhalten bei zunehmender zyklischer Beanspruchung, wie $D_F$ für die Oberflächentopographie (siehe Fig. 1). Insbesondere wurde in Online-Experimenten das signifikante stufenförmige Verhalten von $D_F$ bei wachsender Lastspielzahl gefunden. Dieses Verhalten steht in engem Zusammenhang mit Ergebnissen theoretischer und experimenteller Arbeiten zur Domänenwand-Dynamik in stark ungeordneten magnetischen Systemen. Die bei wachsender Ermüdung gefundenen Plateaus in der fraktalen Dimension des Barkhausenrauschens können danach verschiedenen Symmetrien in der Verformungs- und magnetischen Bereichsstruktur der untersuchten Werkstoffe zugeordnet werden.

Zur Verbesserung der Aussagekraft der Ergebnisse können zusätzlich weitere zerstörungsfreie Prüfverfahren herangezogen werden, um z.B. Rissbildung feststellen zu können.

Neben dem magnetischen Barkhausenrauschen können auch andere elektrische Rauschsignale eingesetzt werden. Z.B. kann für nichtmagnetische Metalle, das Rauschen von gepulstem Wirbelstrom einer fraktalen Analyse unterzogen werden. Analog dazu können ferroelektrische und polymere Materialien mit ferroelektrischem Barkhausenrauschen oder dielektrischen Rauschgrößen geprüft werden.

Die Erfindung kann mit an einem Bauteil stationär vorhandenen geeigneten Sensoren für die Detektion von Rauschsignalen, aber auch mittels Handdetektoren in mehr oder weniger großen Zeitabständen eingesetzt werden. Im letztgenannten Fall kann dann die Bestimmung intermittierend durchgeführt und trotzdem Ergebnisse erhalten werden, obwohl zwischenzeitlich keine Erkenntnisse über die auf das Bauteil wirkenden Belastungen erhalten worden sind.

Es können Sensoren oder Detektoren an einem Bauteil angebracht oder eingesetzt werden, mit denen Belastungen oder plastische Verformungen unterschiedlicher Art und mit unterschiedlicher Achsrichtung detektiert werden können.

Nachfolgend soll die Erfindung beispielhaft näher erläutert werden.

Dabei zeigen:

Figur 1 ein Diagramm der fraktalen Dimension $D_F$ als Funktion von $N/N_B$ (N-Lastwechselzahl, $N_B$-Lastwechselzahl bis zum Bruch) bei Spannungsamplituden $\sigma_a$= 260, 248 und 246 MPa für austenitischen Stahl;

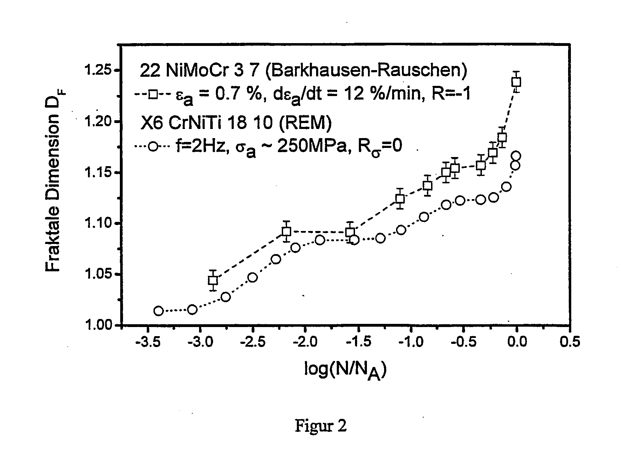

Figur 2 ein Diagramm der fraktalen Dimension $D_F$ als Funktion der Lastspielzahl N bezogen auf die Anzahl zyklischer Lastwechsel bis zu einem Anriss einer Probe eines kupferfreien Stahles;

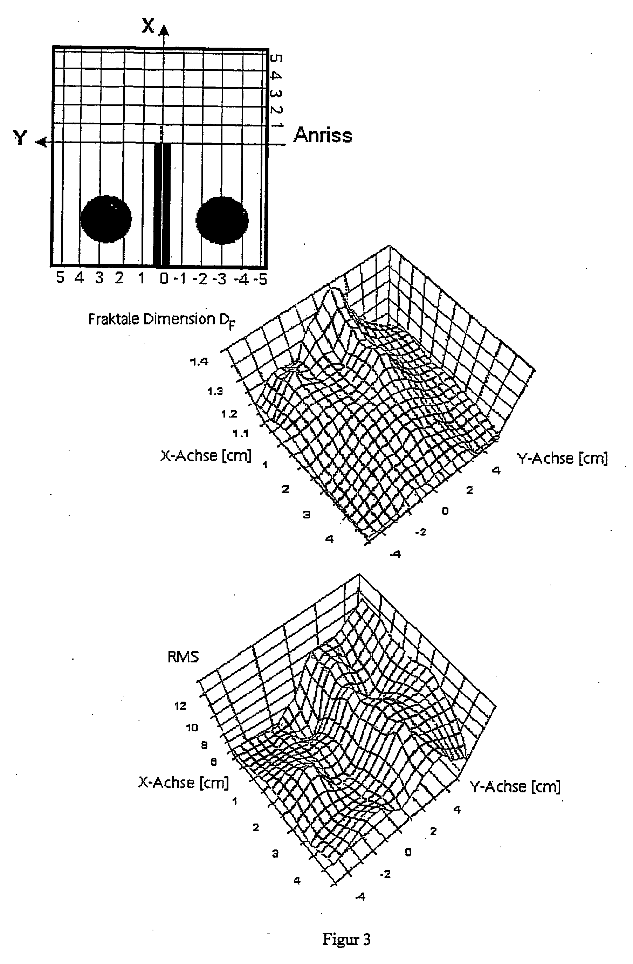

Figur 3 eine CT-Probe mit markiertem Raster und einem Anriss sowie dreidimensionale Darstellungen der RMS- und der DF-Werte der Barkhausenrauschsignalamplituden, die bei Magnetisierung in Anrissrichtung auf der CT-Probe gemessen worden sind;

Figur 4 eine Anordnung zur Messung von Barkhausenrauschsignalen an einem Rohr, als Bauteil mit einem Rohrbogen und Magnetisierungsspulen (Sm1 bis Sm4) und

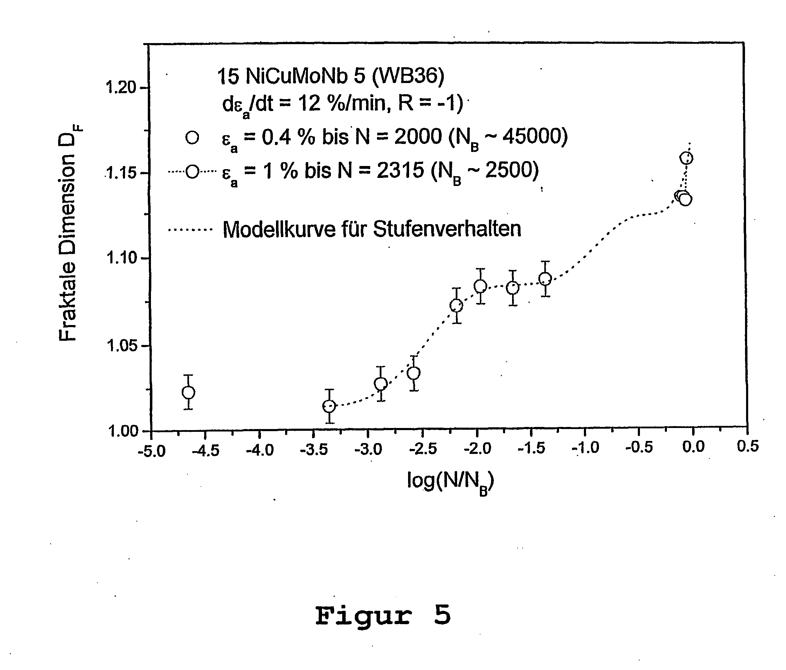

Figur 5 Diagramm der fraktalen Dimension $D_F$ als Funktion der Ermüdung bei unterschiedlichen Beanspruchungen

Nachfolgend soll für zwei für die Reaktorsicherheitsforschung wichtige Einsatzfälle Untersuchungen diskutiert werden. Erstens geht es um das Auffinden kritischer Werkstoffschäden, die z.B. durch Überlastung hervorgerufen werden können. Zum anderen wird das Vorgehen beschrieben, wie mit Hilfe der fraktalen Analyse des Barkhausenrauschens eine kontinuierliche Überwachung kritischer Bauteile oder Positionen an Bauteilen erfolgen und wie die Ergebnisse der Bestimmung zu einer auf Kenntnis der aktuellen Werkstoffschädigung beruhenden Bewertung der Restlebensdauer vorgenommen werden kann.

Unter Verwendung eines Handsensors wurden lokal definiert die magnetischen Rauschsignale in einem zu optimierenden Frequenzbereich, z.B. 2-1000 kHz, aufgezeichnet. Das für die magnetische Anregung erforderliche Magnetfeld wurde mittels zweier magnetischer Pole mit jeweils einer Auflagefläche eingekoppelt. Zwischen beiden Polen befand sich die Empfängerspule mit einem Querschnitt von ca. 1 mm$^2$. Bei sinusförmiger Anregung werden die Echtzeitsignale bei variabel einstellbaren Messzeiten mit einer angepassten Samplingrate von 2,5 Megasamples/s digital aufgezeichnet. Zur weiteren Auswertung werden aus den nach Gauss geglätteten Signalen lokale Maxima bestimmt und symmetrisch um diese Lagen verteilt und dabei insgesamt 4000 Werte der ungeglätteten Messreihe verwendet.

Die Rauschsignale sollten mit ausreichend großer Abtastrate abgetastet werden, um das Nyquist-Shannonsche Abtasttheorem zu erfüllen.

Zur Analyse des Skalenverhaltens wird die Differenzkorrelationsfunktion

$$C(r,q) = \sum_{i=1}^{N-r} \frac{(|S_{i+r} - S_i|)^q}{N-r} \qquad (1)$$

der mit den geglätteten Signalverläufen normierten und anschließend integrierten Signale Si herangezogen. N ist dabei die Gesamtzahl der für die Analyse verwendeten digitalen Signale und der Index i kennzeichnet den diskreten Zeitpunkt $t_i$, zu dem das Rauschsignal $S_i$ aufgenommen wurde. Das Signal $S_{i+r}$ gehört zum Zeitpunkt $t_{i+r}$ mit r > 0. Mit Hilfe des Exponenten q lassen sich stochastische Störeinflüsse separieren, indem das Grenzverhalten größerer q-Werte analysiert wird.

Fraktales Verhalten der Rauschsignale innerhalb eines Korrelationsbereiches r < $r_K$ ($r_K$ - Korrelationsradius) liegt vor, wenn die Korrelationsfunktion (1) folgendes Verhalten aufweist:

$$\ln(C(r,q)) \sim q\, H(q)\, \ln(r) \qquad (2)$$

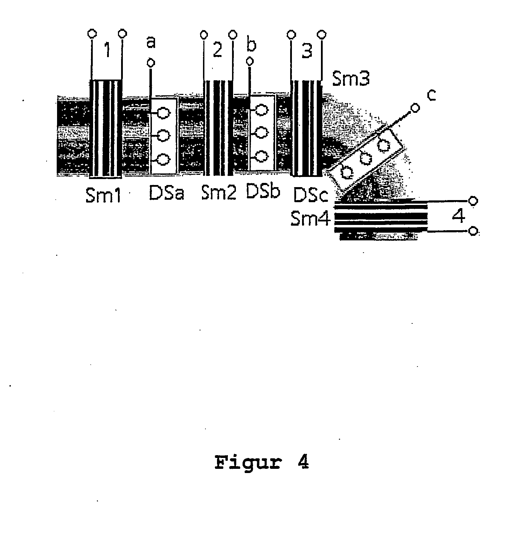

Für die bisher analysierten Barkhausenrauschsignale strebt der Skalenparameter H(q) für q → ∞ gegen einen Grenzwert H*, aus dem eine charakteristische fraktale Dimension $D_F$ = 2 - H* berechnet werden kann. Zur statistischen Absicherung wird eine größere Anzahl von Rauschmaxima ausgewertet. Zur Demonstration dieses Vorgehens für eine CT-Probe aus dem Werkstoff 22 NiMoCr 37, die infolge zyklischer Beanspruchung einen Anriss der Länge von ca. 1 cm aufweist, getestet. Mit einem Raster von 1x1 cm$^2$ wurden die magnetischen Barkhausenrauschsignale bei Magnetisierung längs zum Anriss aufgenommen. Die Ergebnisse sind in Figur 4 wiedergegeben. Dabei wurde mit den Magnetisierungsspulen Sml bis Sm4 das Rohrsegment mit einer sinusförmigen Modulation magnetisiert. Zwischen den Magnetisierungsspulen sind jeweils Sätze von Detektorspulen DSa bis DSc angebracht, wobei entlang des Umfangs, z.B. in der Nähe der neutralen Faser und an Positionen maximaler Beanspruchung jeweils Einzelspulen angeordnet sind, mit denen Barkhausenrauschsignale aufgenommen werden können.

Vergleichsweise wurden auch die mittleren quadratischen Schwankungen (RMS-Werte) der Barkhausenrausch-signale ausgewertet. Aus der Literatur ist bekannt, dass diese Schwankungen ein Maß für die im observierten Werkstoffbereich vorhandenen Eigenspannungen darstellen.

Das Profil der $D_F$-Werte charakterisiert die Ermüdung in der Umgebung des Anrisses sehr gut. Die höchsten $D_F$-Werte werden in der Nähe des Anrisses beobachtet, wobei jedoch der starke Spannungsabfall über den Rissflanken, zu sehen in Figur 4 der RMS-Werte, lokal zu einer partiellen $D_F$-Reduzierung führt. Je weiter die Messposition jedoch vom Anriss entfernt ist, um so kleiner wird in der Regel die fraktale Dimension. Bedingt durch die Spannungsrelaxation, die zu einem ausgeprägten Spannungsminima in der linken Probenhälfte geführt hat, können allerdings auch lokale $D_F$-Maxima auftreten. Ursache dafür können aber auch mechanische Stöße aus einer unbekannten Vergangenheit der Probe gewesen sein. Im Unterschied zu $D_F$ weisen die RMS-Werte, als Maß für die Eigenspannungen, ein komplexeres Bild auf. Neben den typischen Merkmalen, wie das Zugspannungsmaximum auf der Linie in Fortsetzung des Anrisse und die beiden Spannungsminima nahezu symmetrisch links und rechts des Anrisses deutet das weitere Profil auf eine Vorgeschichte, in der entweder der Oberflächenbereich eine ungleichmäßige Beanspruchung erfahren hat oder Werkstoffinhomogenitäten eine Rolle gespielt haben.

Analog zum Ausführungsbeispiel kann durch Vermessung von geeigneten Rastern ein Mapping des Skalenparameters für kritische Positionen der Ermüdungszustand, z.B. von Rohrbögen bewertet werden. Auf jeden Fall kann man konstatieren, dass für diese CT-Probe beide Parameter keine oder nur eine sehr bedingte Korrelation aufweisen.

Zur kontinuierlichen Überwachung von kritischen Komponenten können Magnetisierungsvorrichtungen und Detektorspulen Vorort appliziert werden. Für den Fall eines Rohrbogens ist der Aufbau des Sensorsystems in Figur 4 dargestellt.

Derartige Systeme können leicht in existierende Überwachungssysteme zur Bestimmung der Temperatur-Zeitverläufe integriert werden. Über einen externen PC können die Magnetisierungsspulen und Detektorspulen gesteuert werden. An den Schnittstellen a-c in Figur 4 sorgen Vorverstärker für eine breitbandige Signalübertragung an einen externen Signalprozessor, in dem eine schnelle Auswertung der Rauschsignale erfolgt. Dabei werden nach der gleichen Vorgehensweise wie der Skalenparameter $D_F$, die RMS-Werte und weitere abgeleitete Größen aus dem Rauschsignal bestimmt und zur Dokumentation dem Steuer-PC übergeben. Aus dem Verlauf der Skalenparameter während des Betriebes und der Kenntnis der zu erwartenden zukünftigen Beanspruchungen lässt sich dann die verbleibende Restlebensdauer nach dem folgenden Schema ermitteln:

a) Die am Messort auftretenden Spannungsamplituden $\sigma_a(\Delta t_i)$ und die dazugehörigen Lastspielzahlen pro Zeiteinheit $\alpha(\Delta t_i)$ werden aus den Temperatur-Zeitverläufen für charakteristische Zeitintervalle $\Delta t_i$ berechnet. Dazu können vorhandene Berechnungsprogramme für die zu prüfenden Komponenten herangezogen werden.

b) Aus den Wöhlerlinien für die eingesetzten metallischen Werkstoffe werden die zu $\sigma_a(\Delta t_i)$ gehörigen Bruchspielzahlen $N_B(\Delta t_i)$ ermittelt.

c) Die fraktale Dimension $D_F(m)$ wird für größere Zeitintervalle $\Delta T_m = \Sigma\, \Delta t_i$ bestimmt, wobei die Summation alle Zeitintervalle $\Delta t_i$ innerhalb einer Periode zwischen zwei nacheinander folgender $D_F$-Messungen durchgeführt wird.

d) Wie Versuche gezeigt haben, ist die Funktion $D_F(\tau)$ mit $\tau = -\log(N/N_B)$ (vgl. Figur 6) von der Spannungsamplitude bzw. dem konkreten Wert von $N_B$ als auch vom R-Wert nicht abhängig, weshalb folgende Formel für die Bestimmung der Restlebensdauer $T_R$ angewendet werden kann:

$$T_R = \frac{1}{M} \sum \frac{N_B(\Delta t_i)}{\alpha(\Delta t_i)}(1 - \exp(-\tau_m)) \qquad .$$

$M_m$ ist die Gesamtzahl der Summanden in obiger Formel für das Zeitintervall $\Delta T_m$. $\tau_m$ ergibt sich aus den jeweiligen experimentell bestimmten Werten der fraktalen Dimension $D_F(m)$ und der Beziehung $D_F^{(m)} = D_F(\tau_m)$.

**Patentansprüche**

1. Verfahren zur Bestimmung der Restlebensdauer und/oder des Ermüdungszustandes von Bauteilen aus plastisch verformbarem metallischem oder sprödem Werkstoff, bei dem
   lokal definiert am Bauteil Spannungsamplituden innerhalb charakteristischer Zeitintervalle $\Delta t_i$ mit diesen zugeordneten Lastspielzahlen pro Zeitintervall $\alpha(\Delta t_i) = \Delta N(\Delta t_i) / \Delta t_i$ zeitbezogen bestimmt werden;
   dabei aus der Wöhlerlinie des jeweiligen Werkstoffs die für die bestimmten Spannungsamplituden repräsentativen Lastspielzahlen $N_B(\Delta t_i)$ bis zum Erreichen der Bruchgrenze ermittelt werden;
   aus gemessenen elektrischen oder magnetischen Rauschsignalen für größere Zeitintervalle $\Delta T_m = \Sigma\, \Delta t_i$ die fraktale Dimension $D_F(m)$ bestimmt und daraus die Restlebensdauer oder der Ermüdungszustand ermittelt wird; wobei die Restlebensdauer $T_R(m)$ zum Zeitpunkt einer m-ten Messung mit

$$T_R = \frac{1}{M_m} \sum_i \frac{N_B(\Delta t_i)}{\alpha(\Delta t_i)}(1 - \exp(-\tau_m))$$

berechnet wird; wobei $M_m$ die Gesamtzahl der Summanden für das Zeitintervall $\Delta T_m$ und $\tau_m$ ein aus der ermittelten fraktalen Dimension $D_F(m)$ abgeleitetes Maß für den Schädigungsgrad des jeweiligen Werkstoffs ist.

2. Verfahren nach einem der vorhergehenden Ansprüche, **dadurch gekennzeichnet, dass** für jeweilige Werkstoffe von Bauteilen Kalibrierverläufe $D_F(N/N_B)$ mittels Schwingwechselbeanspruchung ermittelt werden.

**3.** Verfahren nach einem der vorhergehenden Ansprüche, **dadurch gekennzeichnet, dass** magnetische oder ferroelektrische Barkhausenrauschsignale bestimmt werden.

**4.** Verfahren nach einem der vorhergehenden Ansprüche, **dadurch gekennzeichnet, dass** Rauschsignale gepulster Wirbelströme bestimmt werden.

**5.** Verfahren nach einem der vorhergehenden Ansprüche, **dadurch gekennzeichnet, dass** Rauschsignale an mehreren Positionen des Bauteils zeitgleich bestimmt werden.

**6.** Verfahren nach Anspruch 5, **dadurch gekennzeichnet, dass** die Rauschsignale sequentiell bestimmt werden.

**7.** Verfahren nach einem der vorhergehenden Ansprüche, **dadurch gekennzeichnet, dass** die Rauschsignale innerhalb eines Frequenzintervalls von 1 bis 5000 kHz bestimmt werden.

**8.** Verfahren nach Anspruch 7, **dadurch gekennzeichnet, dass** Rauschsignale innerhalb des Frequenzintervalls bei einer für das Bauteil und/oder die jeweilige Position am Bauteil spezifischen Anregungsfrequenz und/oder Stärke der anregenden elektrischen oder magnetischen Feldstärke bestimmt werden.

**9.** Verfahren nach einem der vorhergehenden Ansprüche, **dadurch gekennzeichnet, dass** die Rauschsignale mit der das Nyquist-Shannonsche Abtasttheorem berücksichtigender Abtastrate digitalisiert, nach Gauß geglättet und dann lokale Maxima bestimmt werden, woraufhin um die Maxima eine vorgebbare Anzahl nicht geglätteter Rauschsignale symmetrisch verteilt werden, um die fraktale Dimension $D_F$ und daraus den Ermüdungszustand oder die Restlebensdauer zu bestimmen.

**10.** Verfahren nach einem der vorhergehenden Ansprüche, **dadurch gekennzeichnet, dass** neben der fraktalen Dimension $D_F$ der Spannungszustand im Werkstoff mittels integraler Rauschparameter bestimmt wird.

**11.** Verfahren nach Anspruch 10, **dadurch gekennzeichnet, dass** als Rauschparameter mittlere quadratische Schwankungen oder die integrale Rauschsignalamplitude berücksichtigt werden.

**12.** Verfahren nach einem der vorhergehenden Ansprüche, **dadurch gekennzeichnet, dass** aus dem dritten Moment der Verteilung der Rauschsignale eine Kenngröße zur Bewertung der lokalen plastischen Verformung ermittelt wird.

**13.** Verfahren nach einem der vorhergehenden Ansprüche, **dadurch gekennzeichnet, dass** die Spannungsamplituden innerhalb charakteristischer Zeitintervalle $\Delta t_i$ mit diesen zugeordneten Lastspielzahlen mittels Dehnmessstreifen gemessener Dehnamplituden oder aus Temperatur-Zeitverläufen bestimmt werden.

**Claims**

**1.** A method for determining the remaining service life and/or fatigue state of components made from plastically deformable metal or brittle material, in which, defined at points on the component, stress amplitudes within characteristic time intervals $\Delta t_i$ having numbers of load cycles associated therewith are determined in relation to time for each time interval

$$\alpha(\Delta t_i) = \Delta N\,(\Delta t_i)/(\Delta t_i);$$

and from this, the S-N curve of the respective material is used to establish the numbers of load cycles $N_B\,(\Delta t_i)$ representative of the determined stress amplitudes until the breaking point is reached;
the fractal dimension $D_F(m)$ is determined from measured electrical or magnetic noise signals for relative large time intervals $\Delta T_m = \Sigma\,\Delta t_i$, and from this the remaining service life or fatigue state is established; wherein the remaining service life $T_R(m)$ is calculated at the time of *m*th measurement from

$$T_R = \frac{1}{M_m}\sum_i \frac{N_B(\Delta t_i)}{\alpha(\Delta t_i)}\,(1 - \exp(-z_m))$$

wherein $M_m$ is the total number of summands for the time interval $\Delta T_m$ and $\tau_m$ is a measure derived from the established fractal dimension ($D_F(m)$) for the degree of damage to the respective material.

2. A method according to one of the preceding claims, **characterised in that** calibration profiles $D_F(N/N_B)$ are established for the respective materials of components by means of an oscillating cyclic load.

3. A method according to one of the preceding claims, **characterised in that** magnetic or ferroelectric Barkhausen noise signals are determined.

4. A method according to one of the preceding claims, **characterised in that** noise signals of pulsed eddy currents are determined.

5. A method according to one of the preceding claims, **characterised in that** noise signals are determined at the same time at a plurality of positions on the component.

6. A method according to Claim 5, **characterised in that** the noise signals are determined sequentially.

7. A method according to one of the preceding claims, **characterised in that** the noise signals within a frequency interval of 1 to 5 000 Hz are determined.

8. A method according to Claim 7, **characterised in that** noise signals within the frequency interval with an excitation frequency which is specific to the component and/or the respective position on the component, and/or the intensity of the exciting electrical or magnetic field strength are determined.

9. A method according to one of the preceding claims, **characterised in that** the noise signals are digitalised using the sampling rate determined by the Nyquist-Shannon sampling theorem and subjected to Gaussian smoothing and then local maxima are determined, after which a predeterminable number of noise signals which have not undergone Gaussian smoothing are distributed around the maxima in order to determine the fractal dimension $D_F$ and from that the fatigue state or the remaining service life.

10. A method according to one of the preceding claims, **characterised in that** in addition to the fractal dimension $D_F$ the stress state in the material is determined by means of integral noise parameters.

11. A method according to Claim 10, **characterised in that**, as the noise parameters, variations in the root mean square or the integral noise signal amplitude are taken into account.

12. A method according to one of the preceding claims, **characterised in that** there is determined, from the third moment of distribution of the noise signals, a characteristic for evaluating the local plastic deformation.

13. A method according to one of the preceding claims, **characterised in that** the stress amplitudes within characteristic time intervals $\Delta t_i$ having numbers of load cycles associated therewith are determined using strain gauges of measured strain amplitudes or from temperature/time profiles.

**Revendications**

1. Procédé pour déterminer la durée de vie résiduelle et/ou l'état de fatigue de pièces constituées d'un matériau métallique ou fragile à déformation plastique, dans lequel
on détermine, de manière définie localement sur la pièce, en fonction du temps des amplitudes de tension dans des intervalles de temps caractéristiques $\Delta t_i$ avec des fréquences de cycles par intervalle de temps $\alpha (\Delta t_i) = \Delta N (\Delta t_i)/\Delta t_i$ qui leur sont affectées ;
on établit en l'occurrence, à partir de la courbe de Wöhler du matériau respectif, les fréquences de cycles $N_B(\Delta t_i)$ représentatives des amplitudes de tension déterminées jusqu'à atteindre la limite de rupture ;
on détermine, à partir des signaux de bruit électriques ou magnétiques mesurés pour des intervalles de temps plus grands $\Delta T_m = \Sigma \Delta t_i$, la dimension fractale $D_F(m)$ et on établit à partir de celle-ci la durée de vie résiduelle ou l'état de fatigue ; dans lequel la durée de vie résiduelle $T_R(m)$ est calculée au moment d'une m-ième mesure à l'aide de la formule

$$\mathrm{T_R} = \frac{1}{\mathrm{M_m}} \sum_i \frac{\mathrm{N_B}(\Delta t_i)}{\alpha(\Delta t_i)} (1 - \exp(-\tau_m))$$

dans laquelle $M_m$ est le nombre total des termes d'une somme pour l'intervalle de temps $\Delta T_m$ et $\tau_m$ est une mesure déduite de la dimension fractale $D_F(m)$ établie pour le degré de dégradation du matériau respectif.

2. Procédé selon l'une quelconque des revendications précédentes, **caractérisé en ce qu'**on établit pour des matériaux respectifs de pièces des tracés d'étalonnage $D_F(N/N_B)$ au moyen d'une contrainte de vibrations alternantes.

3. Procédé selon l'une quelconque des revendications précédentes, **caractérisé en ce que** l'on détermine des signaux de bruit Barkhausen magnétiques ou ferroélectriques.

4. Procédé selon l'une quelconque des revendications précédentes, **caractérisé en ce que** l'on détermine des signaux de bruit de courants de Foucault pulsés.

5. Procédé selon l'une quelconque des revendications précédentes, **caractérisé en ce que** des signaux de bruit sont déterminés simultanément dans plusieurs positions de la pièce.

6. Procédé selon la revendication 5, **caractérisé en ce que** les signaux de bruit sont déterminés de manière séquentielle.

7. Procédé selon l'une quelconque des revendications précédentes, **caractérisé en ce que** les signaux de bruit sont déterminés dans un intervalle de fréquences de 1 à 5 000 kHz.

8. Procédé selon la revendication 7, **caractérisé en ce que** des signaux de bruits sont déterminés à l'intérieur de l'intervalle de fréquences pour une fréquence d'excitation spécifique à la pièce et/ou à une position respective sur la pièce et/ou pour une intensité des forces de champ électrique ou magnétique d'excitation.

9. Procédé selon l'une quelconque des revendications précédentes, **caractérisé en ce que** les signaux de bruit sont numérisés à une fréquence d'échantillonnage fondée sur le théorème d'échantillonnage de Nyquist-Shannon, lissés selon Gauss, et **en ce que** des maxima locaux sont ensuite déterminés, après quoi un nombre prédéfinissable de signaux de bruit non lissés est distribué symétriquement autour des maxima afin de déterminer la dimension fractale $D_F$ et, à partir de celle-ci, l'état de fatigue ou la durée de vie résiduelle.

10. Procédé selon l'une quelconque des revendications précédentes, **caractérisé en ce que**, outre la dimension fractale $D_F$, on détermine l'état de tension dans le matériau au moyen de paramètres de bruit intégraux.

11. Procédé selon la revendication 10, **caractérisé en ce que** l'on prend en compte, comme paramètres de bruit, des variations quadratiques moyennes ou l'amplitude intégrale des signaux de bruit.

12. Procédé selon l'une quelconque des revendications précédentes, **caractérisé en ce qu'**une caractéristique permettant d'évaluer la déformation plastique locale est tirée du troisième moment de la distribution des signaux de bruit.

13. Procédé selon l'une quelconque des revendications précédentes, **caractérisé en ce que** les amplitudes de tension sont déterminées par le biais d'amplitudes d'extension mesurées par un extensomètre à résistance ou à partir de tracés de températures en fonction du temps, à l'intérieur d'intervalles de temps $\Delta t_i$ caractéristiques et avec des fréquences de cycles qui leur sont affectées.

**Figur 1**

Figur 2

X

Y ◄

Anriss

5 4 3 2 1

5 4 3 2 1 0 -1 -2 -3 -4 -5

Fraktale Dimension D$_F$

1.4
1.3
1.2
1.1

X-Achse [cm]

Y-Achse [cm]

RMS

12
10
8
6

X-Achse [cm]

Y-Achse [cm]

Figur 3

**Figur 4**

**Figur 5**

**EP 2 108 112 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VON J. SCHREIBER ; M. KRÖNING.** Bewertung der Ermüdungsschädigung von Reaktorteilen anhand fraktaler Eigenschaften von Verformungsstrukturen und deren Rauschverhalten. *Materialien zum 31. MPA-Seminar in Verbindung mit der Fachtagung,* 2005, 38.1-38.21

- **J. SCHREIBER.** Evaluation of materials fatigue of components for nuclear power stations by fractal analysis of deformation structures. *NUCLEAR ENERGY AND SAFETY RESEARCH DEPARTMENT COLLOQUIUM,* 22. Februar 2006
- **J. SCHREIBER ; V. PANIN ; P.V. KUZNETSOV.** Zerstörungsfreie Bestimmung der Restlebensdauer auf der Grundlage von Modellen der Mesomechanik. *Abschlußbericht, BMBF-Förderprojekt,* 1999